# FASCICULE DE BREVET EUROPEEN

(11) **EP 1 026 936 B1**
(45) Date de publication et mention de la délivrance du brevet: **30.01.2002**
(21) Numéro de dépôt: 98952820.3
(22) Date de dépôt: 29.10.1998
(51) Int. Cl.: A01F 25/14

(54) **PROCEDE D'ENGAINAGE DE BALLES DE VEGETAUX ET MATERIELS POUR LA MISE EN OEUVRE DU PROCEDE**
VERFAHREN UM PFLANZENBALLEN ZU UMMANTELN UND VORRICHTUNGEN ZUM DURCHFÜHREN DES VERFAHRENS
METHOD FOR SHEATHING BALES OF PLANTS AND EQUIPMENT FOR IMPLEMENTING SAME

(30) Priorité: 30.10.1997 FR 9713885; 11.08.1998 FR 9810362
(43) Date de publication de la demande: 16.08.2000
(73) Titulaire: LUCAS G, 85130 La Verrie (FR)
(72) Inventeur: LUCAS, Gérard, F-85130 La Verrie (FR)
(74) Mandataire: Michelet, Alain
(86) Numéro de dépôt international: FR9802324
(87) Numéro de publication internationale: WO9922585

(56) Documents cités:
- EP-A- 0 111 434
- EP-A- 0 842 597
- WO-A-96/41514
- FR-A- 2 744 420
- GB-A- 2 195 605
- GB-A- 2 227 220
- US-A- 4 945 715

## Description

La présente invention concerne un procédé d'engainage de balles de végétaux, fourrage ou autre, sous film plastique.

La présente invention concerne également le matériel utilisé pour engainer sous film plastique des balles de végétaux, fourrages ou autres, aussi bien des balles rondes que des balles parallélépipédiques.

Ce matériel est constitué d'une part, d'un banc de stockage et d'étirage du film plastique de façon à former une sorte d'entonnoir, comme décrit dans le document CA-2 111 546 pour des balles rondes, et, d'autre part, de moyens de chargement qui permettent de placer les unes après les autres les balles dans ledit entonnoir.

Le banc d'étirage est disposé sur un chariot qui est de plus aménagé, en amont dudit banc pour accueillir, centrer et guider chaque balle lorsqu'elle est poussée dans l'entonnoir dont la gueule est formée et maintenue ouverte avec un diamètre suffisant par ledit banc d'étirage.

Le chariot peut être déplacé au fur et à mesure de l'introduction des balles comme décrit dans le document GB-2 227 220, d'un pas qui correspond à la longueur de ces balles, directement par l'engin qui manipule les balles c'est-à-dire un engin de transport du genre tracteur agricole muni par exemple d'un bras chargeur ou autre.

La manipulation de ces balles dans les champs ne permet pas de positionner les balles sur le chariot avec une grande précision, et de les enfourner dans la gaine en toute sécurité ; cette opération requiert une certaine dextérité de la part de l'opérateur.

La présente invention propose des moyens qui permettent de simplifier cette opération d'engainage et surtout d'obtenir une grande rapidité d'exécution de cette opération.

De plus, le procédé selon l'invention permet d'améliorer le compactage des balles les unes par rapport aux autres dans la gaine. De préférence, cette gaine est réalisée en matériau plastique élastique ; elle est préalablement étirée pour permettre l'introduction des balles et ensuite après son échappement du banc d'étirage, elle reprend sa position normale en comprimant la périphérie des balles.

La présente invention concerne un procédé selon la revendication 1.

Ce procédé permet d'utiliser du matériel relativement simple. Le chariot d'engainage ne nécessite pas de source d'énergie à demeure. Il a un rôle passif pendant toute l'opération d'engainage.

L'invention concerne également l'outil manipulateur selon la revendication 2.

Selon une disposition préférentielle de l'invention, le dispositif poussoir éjecteur est constitué d'une sorte de compas replié dans le bâti de l'outil manipulateur et qui se déploie sous l'effet d'un vérin hydraulique par exemple, manoeuvré depuis le tracteur par l'opérateur, lequel compas se déploie sur une course qui est au moins égale à la longueur de la balle, de façon à éjecter ladite balle des broches et à déplacer simultanément par réaction, le tracteur et le chariot d'engainage d'un pas qui correspond à la course du poussoir c'est-à-dire au moins à la longueur de la balle éjectée.

Toujours selon l'invention, le compas est constitué - d'une première branche dont la longueur correspond sensiblement à la largeur ou au diamètre de la balle, laquelle branche est articulée à l'une de ses extrémités sur un axe solidaire du bâti porte-broches, et, - d'une deuxième branche articulée à l'autre extrémité de la première branche, et qui est munie à son extrémité libre, d'un poussoir centré sensiblement sur l'axe longitudinal du tracteur, laquelle première branche est mobile sous l'effet d'un vérin qui est monté sur le bâti porte-broches et cette première branche provoque, lors de son déplacement, le déploiement de la deuxième branche de telle façon que ledit poussoir reste sensiblement centré sur ledit axe longitudinal durant toute sa course.

Toujours selon l'invention, la deuxième branche se déploie au moyen d'une chaîne ou câble qui s'enroule sur un secteur de poulie qui est centré sur son axe d'articulation, à l'extrémité de la première branche du compas, lequel câble est solidaire à l'une de ses extrémités, dudit secteur de la deuxième branche et à son autre extrémité, du bâti porte-broches en un point choisi pour permettre le déplacement du poussoir selon l'axe longitudinal du tracteur c'est-à-dire selon une ligne disposée sensiblement dans le plan vertical médian des broches, ou encore le plan vertical médian de la balle à poser sur le chariot d'engainage et prise par lesdites broches.

Dans certaines conditions de fonctionnement, le câble du poussoir peut se détendre et quitter son système de guidage au niveau de l'angle du compas.

La présente invention propose l'utilisation d'une chaîne à rouleaux, double par exemple, pour obtenir un déploiement du compas, laquelle chaîne double à rouleaux présente l'avantage de conserver une grande raideur dans un plan qui est perpendiculaire à l'axe de ses rouleaux, c'est-à-dire dans le plan de déploiement du compas, lequel plan est par exemple horizontal.

Toujours selon l'invention, le bâti porte-broches comporte à sa partie inférieure, une traverse en forme de talon ou sabot qui, d'une part, sert de repère à l'opérateur par rapport au sol, pour permettre un embrochage précis des balles, et, d'autre part, sert d'organe d'accrochage pour réaliser la traction du chariot d'engainage, par réaction lors de l'éjection de la balle enfilée sur les broches, lequel organe coopère à cet effet avec une butée solidaire dudit chariot.

L'invention concerne également le chariot d'engainage selon la revendication 8.

Selon une autre disposition de l'invention, la position de la butée sur les rails est réglable pour s'adapter à la longueur des balles et ces rails peuvent comporter également une seconde butée disposée en aval, de préférence escamotable pour permettre l'engainage de la dernière balle par exemple ; cette seconde butée escamotable est située à une distance de la butée amont qui est au moins égale à la longueur d'une balle.

Compte-tenu de la dimension et du poids des balles, l'invention propose un système de butée qui facilite la manipulation des balles et en particulier leur mise en place sur le chariot.

A cet effet, le chariot comporte un plan de pose des balles formant sole, constitué de préférence de deux rails écartés d'une distance qui correspond approximativement au rayon desdites balles ; ces rails de guidage se situent à un niveau le plus bas possible par rapport au sol et se prolongent en amont de la sole de façon à former un plan incliné à l'entrée du chariot ; l'espace entre les prolongements amont des rails permet de loger une plaque qui coopère pour guider les balles lors de leur mise en place par le tracteur et l'outil associé audit tracteur. Cette plaque-guide est articulée autour d'un axe transversal et horizontal disposé à l'extrémité amont des branches des rails, maintenue élastiquement en saillie et susceptible de s'escamoter automatiquement lors de l'introduction d'une balle. Cette plaque fait également office de système de butée et coopère avec l'outil manipulateur Ce dernier comporte une traverse en forme de talon ou sabot qui escamote automatiquement la plaque, et cette dernière peut jouer un rôle d'avertisseur lorsqu'elle reprend sa position normale de butée dès que l'outil manipulateur a atteint sa position normale de déchargement de la balle. Dans cette position, la butée s'interpose entre la traverse du bâti de l'outil manipulateur et le véhicule tracteur, ce qui a pour effet lors de l'éjection de la balle, par simple réaction, c'est-à-dire lorsque le poussoir dudit outil prend appui sur la balle, de faire reculer simultanément le tracteur et le chariot, le tracteur étant directement poussé par le bâti de l'outil manipulateur alors que le chariot est tracté par ledit bâti grâce à la butée installée à l'amont dudit chariot.

Cet aménagement de l'entrée du chariot avec une butée en forme de plaque de guidage, permet de limiter au strict minimum le déplacement vertical de la balle et de l'outil manipulateur.

Le bâti de l'outil manipulateur comporte, du côté du véhicule tracteur, des moyens qui permettent de le fixer directement sur le système d'attelage trois points dudit tracteur, aussi bien à l'arrière qu'à l'avant du tracteur selon l'équipement de ce dernier, ou sur un dispositif chargeur installé à l'avant dudit tracteur.

De plus, cet outil manipulateur peut s'installer sur d'autres moyens de manipulation de balles comme par exemple un dispositif de chargement en forme de barillet tel que décrit dans le document FR-2 530 117 ; dans ce cas, il y a autant d'outils manipulateurs que de balles, par exemple trois outils disposés en étoile.

Toujours selon l'invention, la partie amont des rails portant la butée, forme une sorte de cadre qui est articulé sur lesdits rails ou le châssis du chariot, autour d'un axe horizontal et transversal, lequel cadre est repliable à l'équerre et verrouillable dans cette position escamoté au moyen de tirants ou autres et ledit châssis et ledit cadre sont aménagés pour permettre l'accrochage dudit chariot sur l'attelage classique trois points d'un tracteur dans le but de déplacer à volonté ledit chariot. Dans ce cas, l'outil manipulateur peut être déposé sur le chariot, porté par ce dernier.

Selon une autre disposition de l'invention, le chariot comporte au niveau des rails de guidage, des guides pour protéger le film plastique lors de l'introduction des balles, lesquels guides permettent également de centrer la balle dans l'entonnoir formé par la gaine plastique tendue sur le banc d'étirage disposé sur le chariot.

Toujours selon l'invention, le châssis du chariot est aménagé de façon à placer les rails de guidage des balles le plus près possible du sol. Dans leur partie amont, les rails se situent à une hauteur qui est compatible avec la capacité normale de levage d'un tracteur lorsque ce dernier est équipé d'un outil manipulateur fixé directement sur son système de relevage trois points. Dans leur partie aval, les rails se situent à quelques centimètres du sol, à une hauteur inférieure ou égale à 10 cm de telle sorte que d'une manière générale, ces rails forment un plan de guidage qui fait un angle S par rapport au sol de l'ordre de 5 à 7°.

Le matériel selon l'invention présente aussi l'avantage d'être compact. La longueur des rails de guidage des balles, en aval de la butée, est de l'ordre de deux fois et un tiers celle des balles.

L'invention sera encore détaillée à l'aide de la description suivante et des dessins annexés donnés à titre indicatif, et dans lesquels :
- la figure 1 représente, vu de côté schématiquement, le chariot d'engainage avec une portion d'un tracteur agricole équipé d'un outil de manipulation de balles ;
- la figure 2 montre une variante de montage de l'outil manipulateur qui est porté par un bras de levage équipant un tracteur agricole ;
- la figure 3 représente, sous la forme d'un schéma fonctionnel, les éléments constitutifs de l'outil manipulateur avec le compas en position repliée et déployée ;
- la figure 4 représente, vus de côté et toujours sous la forme d'un schéma fonctionnel, certains éléments constitutifs de l'outil manipulateur, avec le compas déployé ;
- la figure 5 montre, schématiquement, le chariot vu de dessus avec notamment, le banc d'étirage les rails de guidage et le système de butée ;
- la figure 6 représente, schématiquement, la partie avant du chariot montrant l'extrémité amont des rails de guidage, et la butée en position escamotée par une balle qui est portée par l'outil manipulateur ;
- la figure 7 montre la butée en position active lorsque la balle est sur le chariot, avant la mise en oeuvre du poussoir ;
- la figure 8 montre le système aménagé à l'avant du chariot pour permettre son accrochage sur un attelage trois points d'un tracteur.

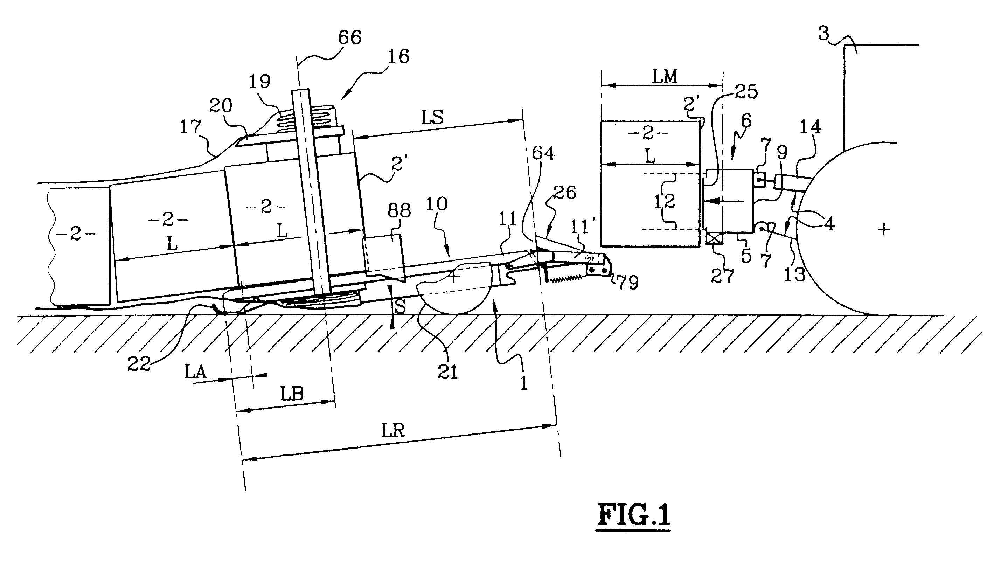

La figure 1 montre, schématiquement, le chariot 1 sur lequel on trouve des balles 2 qui sont amenées par un tracteur 3.

Le tracteur 3 comporte, d'une façon classique, un système d'attelage 4 du type trois points sur lequel est monté le bâti 5 d'un outil 6 permettant de manipuler les balles 2. L'attelage trois points coopère avec des points d'ancrage 7 disposés sur la face verticale 9 du bâti 5.

Le système d'attelage trois points 4 a un débattement suffisant pour récupérer les balles 2 sur le sol, et les soulever à une hauteur suffisante avant de les présenter à l'entrée du chariot 1, sur une sole 10 constituée par exemple d'une paire de rails 11 disposés longitudinalement.

Le bâti 5 de l'outil manipulateur comporte des broches 12 qui s'enfichent dans la balle 2 à mi-hauteur. Une broche 12 complémentaire, disposée à la partie inférieure du bâti 5, peut s'enficher dans la partie inférieure de la balle, pour améliorer sa stabilité par rapport à l'outil manipulateur.

La longueur de ces broches est de l'ordre par exemple de la moitié de la longueur d'une balle 2.

Le système d'attelage trois points comporte, d'une façon classique, deux barres d'attelage inférieures 13 et selon les besoins en matière de manipulation, un troisième point télescopique constitué d'un vérin 14

Ce vérin 14 permet d'incliner à volonté le bâti 5 de l'outil manipulateur 6 pour faciliter par exemple, la mise en place des balles sur le chariot, devant le banc d'étirage 16.

Les balles 2 sont placées à la queue leu leu dans une gaine 17. Cette gaine 17 est stockée sous forme de plis superposés 19 au niveau du banc d'étirage 16, lesquels plis sont portés par des bras-supports 20 disposés par exemple de façon à former un polygone à six côtés pour l'engainage de balles rondes ou former un carré pour l'engainage de balles parallélépipédiques. Ces bras-supports 20 écartent les plis 19 de la gaine 17, formant une sorte d'entonnoir pour permettre le passage des différentes balles 2.

Le chariot 1 est apte à se déplacer sur le sol. Il comporte à cet effet des roues 21 disposées au niveau de la sole 10, et, à l'arrière, il peut comporter des patins 22 et/ou des roues également. De préférence, le bâti du chariot et ses rails 11 sont inclinés par rapport au sol d'un angle S de 5 à 7° par exemple et l'extrémité aval desdits rails est très proche du sol, à quelques centimètres, une dizaine environ, pour permettre une formation en douceur de la gaine et du « saucisson » de balles.

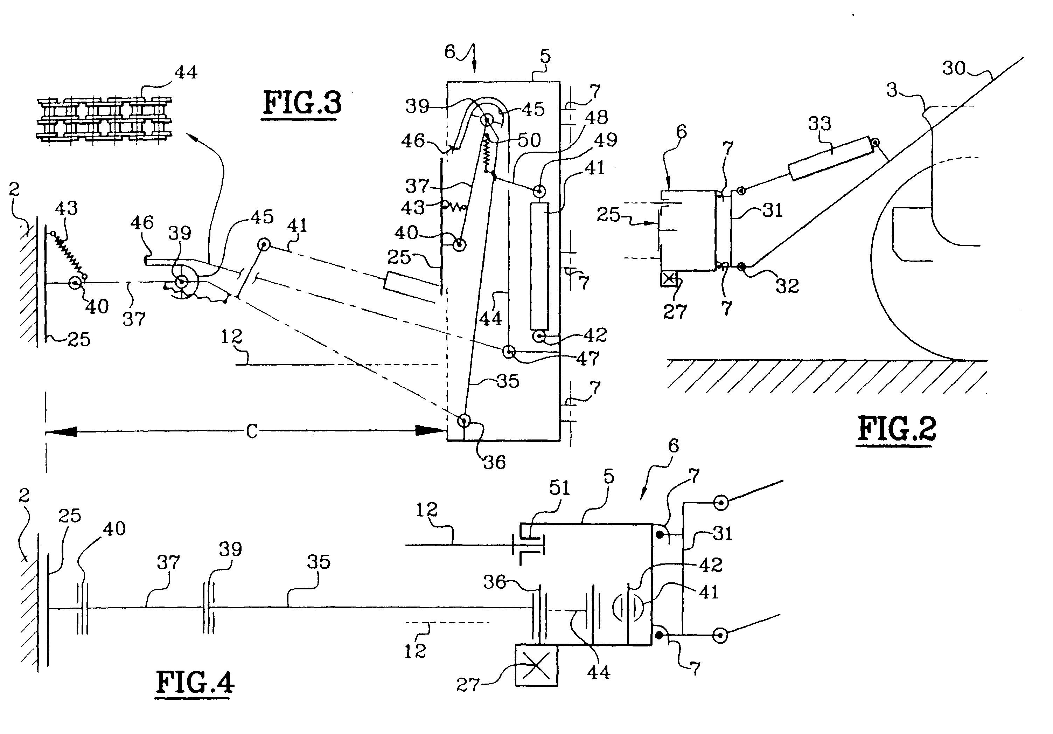

L'outil manipulateur 5 comprend un poussoir 25 détaillé plus loin en liaison avec les figures 3 et 4, lequel poussoir presse la balle 2 contre la balle déposée précédemment et qui se situe dans et en aval du banc d'étirage 16. Lorsque le poussoir 25 entre en contact et qu'il est en appui sur la face 2' de la balle qu'il porte, il prend appui sur cette dernière, et c'est le bâti 5 dudit poussoir 25 qui se déplace par réaction entraînant le tracteur 3 et le chariot 1 qui, au fur et à mesure de son déplacement, déroule automatiquement les plis 19 pour emballer les dernières balles.

La course C du poussoir 25, figure 3, correspond au moins à la longueur d'une balle 2, et la longueur des rails de guidage 11 est supérieure à deux fois la longueur d'une balle. Les rails 11 peuvent aussi se prolonger à leur partie aval afin de continuer à soutenir la balle qui a quitté le banc 16.

Le déplacement du chariot 1 par réaction s'effectue grâce à la présence d'une butée 26 disposée en amont de la sole 10 entre des prolongements 11' situés à l'extrémité avant des rails 11. Cette butée 26 coopère avec une traverse 27 disposée sous le bâti 5 de l'outil manipulateur. Lorsque la balle 2 portée par l'outil est présentée sur la sole 10, cette traverse 27 s'étend au-dessus de l'extrémité amont des rails 11, entre la face 2' de la balle 2 en question et la partie active de la butée 26 détaillée plus loin.

La figure 2 montre une variante de montage de l'outil manipulateur 6. Celui-ci est fixé sur un bras chargeur 30 installé de façon classique à l'avant du tracteur 3. Ce bras 30 comporte à son extrémité avant une platine 31 dont le mouvement autour de l'axe 32 est géré par un vérin 33. Les points d'ancrage 7 de l'outil 6 sont fixés sur la platine 31 aménagée à cet effet.

Le fonctionnement de l'outil manipulateur 6 est le même, quelle que soit sa situation sur le tracteur, lequel tracteur peut d'ailleurs comporter plusieurs outils disposés à l'avant et à l'arrière.

Les figures 3 et 4 représentent sous forme de schémas fonctionnels, le mécanisme de manoeuvre du poussoir de l'outil 6.

Le mouvement du poussoir 25 est obtenu par exemple au moyen d'un dispositif du genre compas logé dans le bâti porte-broches 5. Ce compas qui présente l'avantage d'être compact, est constitué d'une première branche 35 dont la longueur est voisine de la largeur ou du diamètre de la balle 2 s'il s'agit d'une balle ronde. Cette branche 35 est articulée sur un axe 36 solidaire du bâti 5. Cette première branche est horizontale et comporte à son extrémité libre une seconde branche 37 articulée autour d'un axe 39 disposé à l'extrémité de ladite première branche, laquelle seconde branche 37 comporte à son autre extrémité, le poussoir 25 monté sur un axe 40.

La première branche 35 est mobile sous l'effet d'un vérin 41 qui est fixé sur un axe 42 solidaire du bâti 5. Ce vérin est manoeuvré depuis le tracteur par l'opérateur. Le déploiement de la première branche 35 autour de son axe d'articulation 36, provoque un pivotement de la seconde branche 37 autour de l'axe 39 commun avec la première branche 35.

Ce pivotement s'effectue de façon à maintenir le poussoir 25 et en particulier son axe 40 sur l'axe longitudinal du tracteur, lequel axe correspond aussi au plan vertical médian du chariot lorsque le chargeur a déposé une balle sur ce dernier.

Le poussoir 25 est articulé sur l'axe 40 et maintenu par un ressort 43 de faible tension qui tend à le ramener contre la branche 37.

Le mouvement coordonné des branches 35 et 37 du compas est réalisé au moyen d'un câble ou chaîne 44, qui s'enroule sur un secteur circulaire 45 en forme de portion de poulie ou pignon par exemple ; ce secteur 45 est centré sur l'axe d'articulation 39, solidaire de ladite deuxième branche. Le câble ou chaîne est fixé à son extrémité 46 sur un prolongement du secteur 45, de façon réglable et à son autre extrémité sur un point fixe 47 solidaire du bâti 5. lequel point 47 est choisi de façon à obtenir un déplacement quasi rectiligne du poussoir 25, selon l'axe longitudinal du tracteur, comme mentionné précédemment.

On remarque qu'une bonne portion du câble 44 se situe entre la première branche 35 et le vérin 41.

La liaison entre le vérin 41 et la branche 35 s'effectue au moyen d'une chape 48 dans laquelle passe la chaîne 44, et le vérin 41 est articulé sur cette chape au moyen d'un axe 49.

Un ressort de rappel 50 est interposé entre la première et la seconde branche pour maintenir le câble 44 en traction et permettre le rappel automatique de ladite seconde branche.

La chaîne 44 est de préférence constituée d'une chaîne à rouleaux double comme représenté à part figure 3. Cette chaîne à rouleaux présente l'avantage d'être rigide dans un plan qui est perpendiculaire à l'axe de ses rouleaux, lequel plan correspond au plan de déploiement du compas, c'est-à-dire un plan horizontal.

La figure 4 montre également les broches 12 qui sont solidaires du bâti 5, verrouillées dans des orifices 51. Le poussoir 25 s'étend entre les deux broches 12 sous le niveau de ces dernières par exemple.

On remarque figure 3, la course C du poussoir 25 entre sa position inactive où il est situé dans le plan de la face de montage des broches 12 et sa position active lorsque le dièdre constitué de la branche 35 et de la branche 37 est complètement déployé sous l'effet du vérin 41 et de la chaîne 44.

Cette course C est tout d'abord nettement supérieure à la longueur des broches 12 pour permettre l'éjection de la balle, et, comme mentionné précédemment, elle est supérieure à la longueur des balles 2, de l'ordre de une fois un quart par exemple.

La figure 4 montre, vu de côté, l'agencement du mécanisme de déplacement du poussoir 25. On retrouve la première branche 35 en position déployée et la seconde branche 37 interposée entre la première branche et ledit poussoir 25. Ces deux branches se déplacent dans un plan horizontal.

La première branche 35 est articulée sur l'axe 36 qui est solidaire du bâti porte-broches 5. On retrouve le point d'ancrage 47 de la chaîne ou du câble 44 et on retrouve également l'axe 42 sur lequel est articulé le vérin 41 qui sert à manoeuvrer la première branche 35.

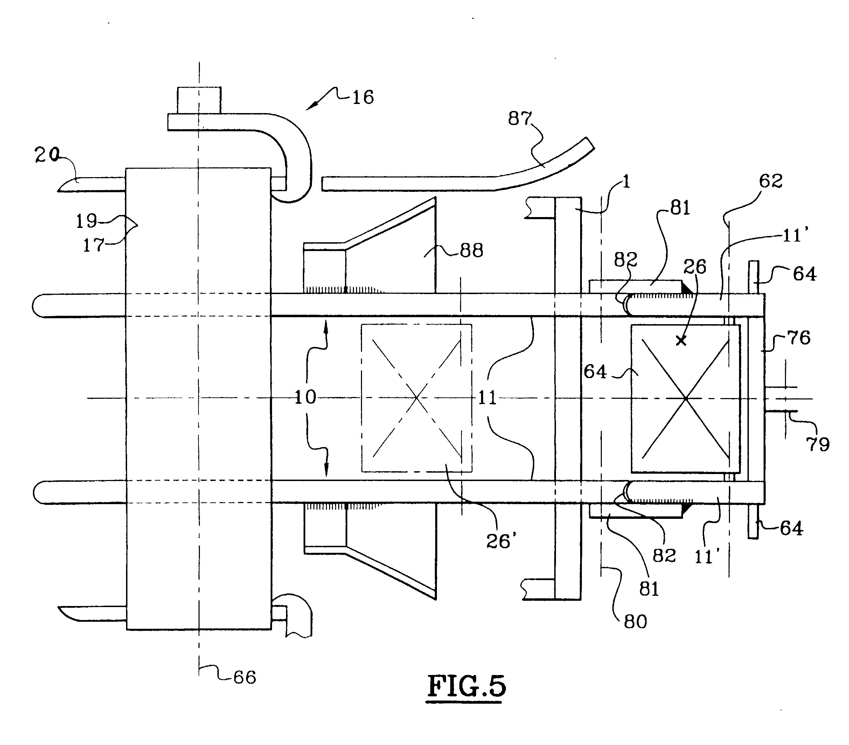

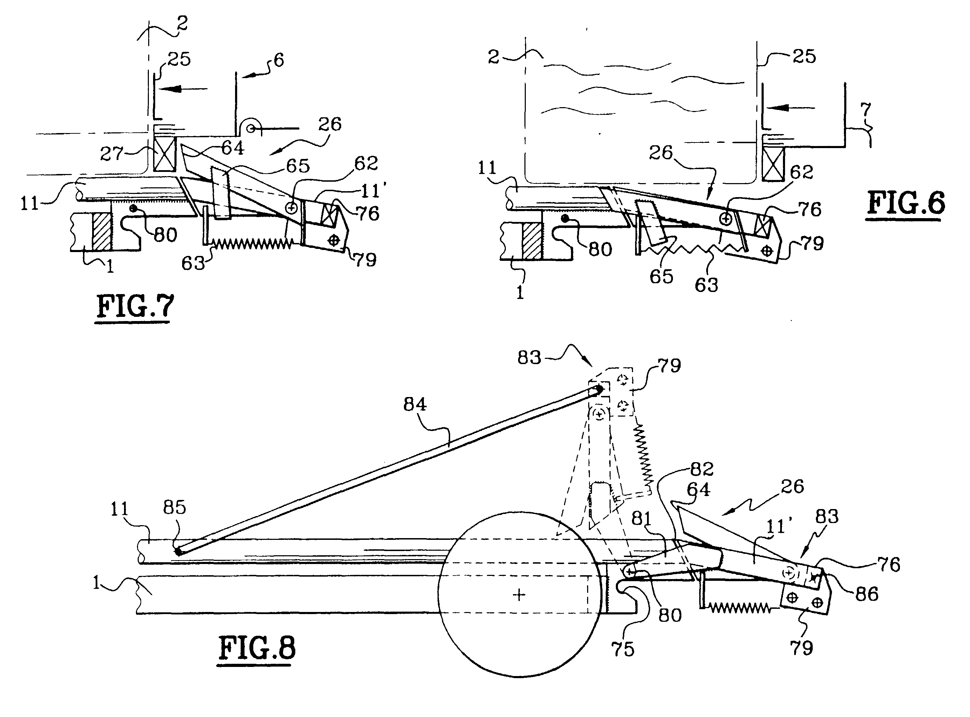

Sur la figure 1, on remarque que les prolongements 11' amont des rails 11 sont inclinés vers le sol formant une sorte de rampe pour faciliter l'introduction de la balle 2. Entre ces prolongements 11', on trouve, comme représenté aussi figure 5, la butée 26 qui se présente sous la forme d'une plaque rectangulaire comblant l'espace entre les prolongements 11'. Cette butée faisant office de guide est articulée sur un axe transversal horizontal 62, à l'extrémité avant des prolongements 11'. Un système de rappel élastique sous forme de ressort 63 permet de maintenir la butée 26 en position active, c'est-à-dire dans une position telle que sa face d'extrémité aval 64 puisse agripper la traverse 27 du bâti 5, comme représenté figures 1 et 7.

Des pattes 65, visibles figures 6 et 7, limitent la course de la butée 26 lorsqu'elle revient en position active après le passage de l'outil 6 et en particulier de sa traverse 27. Le retour brutal de la butée 26 en position active s'accompagne d'un claquement caractéristique avertisseur, qui informe l'opérateur et lui permet d'engager la procédure d'éjection et d'engainage de la balle.

La figure 1 montre la longueur LR des rails 11 entre la face active 64 de la butée 26 et l'extrémité aval desdits rails.

Cette longueur LR est de l'ordre de deux fois et un tiers la longueur des balles 2. Elle comprend la longueur de la sole LS, plus la longueur d'une balle L et un complément d'appui LA pour la balle engainée afin de maintenir cette dernière dans une position intermédiaire entre le sol et le chariot.

La longueur LS de la sole 10, entre la face 2' de la balle qui se situe dans le banc 16 et la face active 64 du verrou 26, est sensiblement supérieure à la longueur LM d'une balle augmentée de la distance qui sépare le poussoir 25 de la face active de la traverse 27 de l'outil manipulateur. Ces différents aménagements permettent d'obtenir un matériel compact et particulièrement efficace.

L'axe médian transversal 66 du banc d'étirage 16 se situe à une distance LB de l'extrémité aval des rails 11 qui est de l'ordre du tiers de leur longueur LR.

La figure 8 montre des moyens complémentaires aménagés à l'avant du chariot 1, c'est-à-dire sa partie amont, pour faciliter son déplacement sur le terrain, au moyen du tracteur.

L'extrémité avant du bâti du chariot 1 comporte des points d'ancrage 75 qui coopèrent par exemple avec les bras de relevage inférieurs 13 d'un attelage classique. Le troisième point d'ancrage est aménagé à l'extrémité avant d'une barre transversale 76 qui relie entre elles les extrémités amont des prolongements 11' des rails 11.

Le troisième point 79 est aménagé sur cette traverse 76, à sa partie centrale.

Les prolongements 11' forment avec la traverse 76, une sorte de cadre, figure 5, qui est articulé sur un axe 80 disposé horizontalement et transversalement au-dessus du niveau des crochets 75. Les prolongements 11' sont montés sur les chapes 81 articulées sur l'axe 80 et les rails 11 sont découpés en biais.

La position des découpes 82 des rails 11 et celle de l'axe 80 sont telles qu'elles permettent le basculement à la verticale de l'extrémité avant de l'ensemble constitué des prolongements 11', de la butée 26 et du troisième point 79. Dans cette position, cet ensemble 83 est maintenu au moyen de tirants 84 interposés entre des axes 85 disposés latéralement sur les rails 11 du chariot ou sur le bâti de ce dernier, et des axes 86 disposés par exemple aux extrémités de la traverse 76.

La manipulation du chariot d'engainage s'effectue notamment pour son installation sur le terrain ou pour le démarrage d'un nouveau silo-saucisson.

La manipulation peut également s'effectuer en fin de chantier et dans ce cas, l'outil manipulateur peut être démonté et posé sur le chariot.

On peut également prévoir des barres complémentaires 87 disposées à mi-hauteur de la balle, de chaque côté, pour améliorer son guidage et son introduction dans le banc d'étirage sans risquer de blesser le film plastique constituant la gaine.

De même, à la partie inférieure de la sole 10, on peut placer, comme représenté figures 1 et 5, des guides 88 qui permettent de caler et de guider la balle 2 à l'entrée du banc d'étirage, toujours dans le but d'éviter les agressions sur le film plastique 9.

Ces guides 88 sont constitués de plaques métalliques solidaires des rails 11, disposées de part et d'autre desdits rails, dans la partie inférieure du banc d'étirage.

Sur la figure 5, on remarque également, entre les rails 11 et en amont du banc d'étirage 16, une butée 26' escamotable, représentée en traits mixtes fins. Cette deuxième butée 26', similaire à la butée amont 26, permet de pousser la dernière balle au-delà du banc 16 lorsque l'outil manipulateur est installé comme représenté figure 2, sur un bras chargeur 30. La butée 26' coopère avec l'outil manipulateur comme détaillé auparavant pour la butée 26.

Si l'outil manipulateur 6 est installé sur des bras de relevage d'un tracteur, comme représenté figure 1, le dégagement de la dernière balle peut s'effectuer en interposant une entretoise dont la longueur correspond à celle des balles entre le poussoir 25 et la face 2' de la balle qui est dans le banc d'étirage 16. Ensuite, la procédure d'engainage s'effectue comme détaillé précédemment.

## Revendications

1. Procédé d'engainage de balles de végétaux dans un film plastique tubulaire formant une gaine (17), au moyen d'un chariot (1) qui se déplace au fur et à mesure du remplissage de ladite gaine (17), consistant :
- à manipuler une balle au moyen d'un engin de transport muni d'un outil manipulateur (6) qui est équipé de broches (12),
- à déposer ladite balle sur ledit chariot en amont des supports (20) d'un banc d'étirage (16) permettant le stockage du film plastique tubulaire,
- à pousser ladite balle à l'intérieur de la gaine, en appui contre la balle précédente,
- à déplacer ledit chariot (1) d'un pas correspondant à la longueur de ladite balle,
**caractérisé en ce qu'**il consiste à pousser ladite balle au moyen dudit outil manipulateur équipé d'un dispositif poussoir éjecteur dont le mouvement provoque, par réaction et simultanément, le recul dudit engin, lequel outil est aménagé pour entraîner également simultanément ledit chariot (1) sur une distance qui correspond au moins à la longueur de la balle (2) déposée en dernier lieu sur ledit chariot.

2. Outil manipulateur agencé pour pouvoir être porté par un engin de transport du genre tracteur agricole, pour la mise en oeuvre du procédé selon la revendication 1, comportant un bati (5) sur lequel sont montés au moins une paire de broches (12) et un dispositif poussoir éjecteur incorporé dans ledit bâti, à l'arrière desdites broches, dont la course C est au moins égale à la longueur d'une balle, lequel bâti comportant des moyens d'accrochage (7) sur le système d'attelage trois points (4) d'un tracteur ou sur un bras chargeur (30) classique disposé à l'avant dudit tracteur, l'outil comportant des moyens pour entraîner le chariot (1).

3. Outil manipulateur selon la revendication 2, **caractérisé en ce que** le dispositif poussoir éjecteur comprend une sorte de compas qui se déploie sous l'effet d'un vérin hydraulique (41) notamment, déplaçant un poussoir (25) proprement dit, sur une course C qui est au moins égale à la longueur de la balle (2), de façon à éjecter ladite balle des broches (12) du bâti porte-broches et à déplacer simultanément le tracteur porte-outil et le chariot d'engainage d'un pas qui correspond au moins à la longueur de la balle éjectée.

4. Outil manipulateur selon la revendication 3, **caractérisé en ce que** le compas est constitué d'une première branche (35) dont la longueur correspond sensiblement à la largeur de la balle (2), laquelle branche est articulée à l'une de ses extrémités sur un axe (36) solidaire du bâti porte-broches et, d'une deuxième branche (37) articulée à l'autre extrémité de ladite première branche, et qui est munie à son extrémité libre, du poussoir (25) centré par rapport au plan vertical médian des deux broches (12), laquelle première branche (35) est mobile sous l'effet du vérin (41) provoquant, lors de son pivotement, le déploiement de la deuxième branche (37) de telle façon que le poussoir (25) reste sensiblement centré sur l'axe longitudinal du tracteur (3), durant toute sa course.

5. Outil manipulateur selon la revendication 4, **caractérisé en ce que** la seconde branche (37) se déploie autour de son axe d'articulation (39) situé à l'extrémité du bras (35), au moyen d'une chaîne ou câble (44) qui s'enroule sur un secteur circulaire d'une poulie-pignon (45), lequel câble est solidaire de la deuxième branche (37) et en particulier à l'une de ses extrémités, dudit secteur circulaire (45), l'autre extrémité (47) étant solidaire du bâti (5) en un point choisi pour permettre le déplacement du poussoir (25) selon une ligne qui correspond à l'axe longitudinal du tracteur (3).

6. Outil manipulateur selon la revendication 5, **caractérisé en ce que** la chaîne (44) est en forme de chaîne à rouleaux, de préférence double.

7. Outil manipulateur selon l'une quelconque des revendications 2 à 6, **caractérisé en ce que** le bâti porte-broches (5) comporte une traverse (27) en forme de talon ou sabot qui, d'une part, sert de repère par rapport au sol pour positionner ledit bâti au moment de l'opération d'embrochage d'une balle, afin de positionner toujours de la même façon ladite balle par rapport audit bâti, et d'autre part, sert d'organe de traction et d'entraînement du chariot (1) lors de l'éjection de la balle, en coopération avec une butée (26) disposée sur ledit chariot.

8. Chariot d'engainage pour la mise en oeuvre du procédé selon la revendication 1, coopérant avec l'outil manipulateur (6) selon l'une quelconque des revendications 2 à 7, comportant une sole (10) qui s'étale en amont du banc d'étirage (16), laquelle sole est constituée de la partie amont de rails (11), qui s'étendent sur ledit chariot sur une longueur au moins égale à deux fois la longueur d'une balle (2), lesquels rails sont solidaires du bâti du chariot et comportent, entre les prolongements amont (11') aménagés en bout desdits rails (11), une butée (26) en forme de plaque, qui est articulée à l'extrémité avant desdits prolongements (11') autour d'un axe horizontal et transversal (82), laquelle butée est maintenue en saillie à l'entrée de la sole (10), par des moyens élastiques de façon à s'escamoter automatiquement si nécessaire lors de la présentation et de la mise en place d'une balle sur ladite sole, laquelle butée coopère par son extrémité aval (64) avec ledit outil manipulateur (6) et en particulier la traverse (27) disposée sous le bâti (5) de cet outil pour permettre, par réaction lors de l'éjection de la balle au moyen du poussoir (25) dudit outil, le déplacement automatique et simultané dudit chariot (1) et du tracteur (3) qui porte ledit outil.

9. Chariot selon la revendication 8, **caractérisé en ce qu'**il comporte, entre les rails (11), en amont du banc d'étirage (16), une deuxième butée (26') escamotable, qui permet d'engainer la dernière balle.

10. Chariot selon l'une quelconque des revendications 8 ou 9, **caractérisé en ce que** la partie amont de la sole (10) du chariot (1), au niveau de laquelle est située la butée (26), forme une sorte de cadre articulé autour d'un axe horizontal transversal (80), lequel cadre est repliable et verrouillable dans cette position au moyen de tirants (84) et comporte, ainsi que le châssis dudit chariot, des moyens d'ancrage (79, 75) coopérant avec le système d'attelage trois points (4) d'un tracteur.

11. Chariot selon l'une quelconque des revendications 8 à 10, **caractérisé en ce qu'**il comporte au niveau des rails de guidage (11) du chariot (1), en amont de l'entrée du banc d'étirage (16), des guides (88) aménagés pour centrer et guider la balle lors de son introduction dans le banc d'étirage afin d'éviter de blesser la gaine tendue entre les supports (20) dudit banc.

12. Chariot selon l'une quelconque des revendications 8 à 11, **caractérisé en ce que** le châssis du chariot (1) est aménagé de façon à placer les rails (11) servant au support et au guidage des balles, lorsque ledit chariot est en position active d'engainage, dans un plan incliné situé près du sol, à une hauteur compatible, en amont, avec la capacité de levage des balles du tracteur lorsque ce dernier est équipé d'un outil manipulateur fixé directement sur le système de relevage trois points, et en aval, à une hauteur de l'ordre de quelques centimètres par rapport au sol, inférieure ou égale à 10 centimètres.

13. Chariot selon l'une quelconque des revendications 8 à 12, **caractérisé en ce que** la longueur LS de la sole (10) du chariot qui s'étend entre l'entrée du banc d'étirage (16) et la face active (64) du verrou (26) est sensiblement supérieure à la longueur d'une balle (2) augmentée de la distance entre le poussoir et la face active de la traverse (27) qui est située sous le bâti (5) dudit outil et qui coopère avec ladite face active (64) du verrou (26).

14. Chariot selon la revendication 13, **caractérisé en ce que** la longueur LR des rails de guidage (11) est de l'ordre de deux fois et un tiers la longueur des balles (2), lesquels rails (11) s'étendent en aval de l'axe médian du banc d'étirage (6), sur une longueur qui est de l'ordre du tiers de ladite longueur LR.

## Patentansprüche

1. Verfahren zum Verpacken von Pflanzenballen in einer röhrenförmigen Kunststofffolie, die eine Hülle (17) bildet, mit Hilfe eines Schlittens (1), der sich im Zuge und dem Maß der Befüllung dieser Hülle (17) verschiebt, umfassend :
- Manipulieren eines Ballens mit Hilfe eines Transportgeräts, das mit einem mit Spindeln (12) versehenen Manipulatorwerkzeug (6) ausgestattet ist,
- Legen des Ballens auf den Schlitten im Vorlaufbereich der Stützen (20) einer Streckeinrichtung (16), die die Lagerung der röhrenförmigen Kunststofffolie ermöglicht,
- Stoßens des Ballens in das Innere der Hülle, anliegend an den vorhergehenden Ballen,
- Verschieben des Schlittens (1) um einen Schritt, der der Länge des Ballens entspricht,
**dadurch gekennzeichnet, dass** es das Verschieben des Ballens mit Hilfe des Manipulatorwerkzeugs umfasst, das mit einer Ausstoßvorrichtung versehen ist, deren Bewegung, durch Reaktion und gleichzeitig, das Zurückfahren der genannten Einrichtung hervorruft; welches Werkzeug ausgebildet ist, dass es auch gleichzeitig den Schlitten (1) auf einer Distanz antreibt, die zumindest der Länge des Ballens (2), der als letzter auf den Schlitten gelegt wird, entspricht.

2. Manipulatorwerkzeug, das ausgebildet ist, um von einem Transportgerät von der Art Landwirtschaftstraktor getragen werden zu können, für die Durchführung des Verfahrens nach Anspruch 1, umfassend ein Gehäuse (5), auf dem mindestens ein Spindelpaar (12) montiert ist, und eine Ausstoßvorrichtung, die in dem Gehäuse hinter den Spindeln eingegliedert ist, deren Weg C zumindest gleich der Länge eines Ballens ist, welches Gehäuse Mittel (7) zur Befestigung am Dreipunktkupplungssystem (4) eines Traktors oder an einem herkömmlichen Ladearm (30), der vorne am Traktor vorgesehen ist, umfasst, wobei das Werkzeug Mittel für den Antrieb des Schlittens (1) umfasst.

3. Manipulatorwerkzeug nach Anspruch 2, **dadurch gekennzeichnet, dass** die Ausstoßvorrichtung eine Art Zirkel umfasst, der sich insbesondere unter der Wirkung eines Hydraulikzylinders (41) entfaltet und einen eigentlichen Schieber (25) auf einem Weg C, der zumindest gleich der Länge des Ballens (2) ist, verschiebt derart, dass der Ballen aus-den Spindeln (12) des Spindelgehäuses ausgestoßen wird und gleichzeitig der Werkzeugtragetraktor und der Verpackungsschlitten um einen Schritt verschoben werden, der zumindest der Länge des ausgestoßenen Ballens entspricht.

4. Manipulatorwerkzeug nach Anspruch 3, **dadurch gekennzeichnet, dass** der Zirkel aus einem ersten Schenkel (35), dessen Länge im Wesentlichen der Länge des Ballens (2) entspricht, welcher Schenkel an einem seiner Enden an einer Achse (36) angelenkt ist, die mit dem Spindelgehäuse fest verbunden ist, und aus einem zweiten Schenkel (37) gebildet ist; der am anderen Ende des ersten Schenkels angelenkt ist und der an seinem freien Ende mit dem Schieber (25) versehen ist, der in Bezug auf die mittlere Vertikalebene der beiden Spindeln (12) zentriert ist, und dass der erste Schenkel (35) unter der Wirkung des Zylinders (41) beweglich ist und bei seiner Schwenkbewegung die Entfaltung des zweiten Schenkels (37) hervorruft, derart, dass der Schieber (25) während seines gesamten Weges im Wesentlichen entlang der Längsachse des Traktors (3) zentriert bleibt.

5. Manipulatorwerkzeug nach Anspruch 4, **dadurch gekennzeichnet, dass** sich der zweite Schenkel (37) um seine Gelenkachse (39), die sich am Ende des Armes (35) befindet, mit Hilfe einer Kette oder eines Kabels (44) entfaltet, die bzw. das auf einem kreisförmigen Abschnitt einer Zahnradrolle (45) aufgewickelt wird, und dass das Kabel mit dem zweiten Schenkel (37) und insbesondere an einem seiner Enden mit dem kreisförmigen Abschnitt (45) fest verbunden ist, wobei das andere Ende (47) mit dem Gehäuse (5) an einem ausgewählten Punkt fest verbunden ist, um die Verschiebung des Schiebers (25) entlang einer Linie zu ermöglichen, die der Längsachse des Traktors (3) entspricht.

6. Manipulatorwerkzeug nach Anspruch 5, **dadurch gekennzeichnet, dass** die Kette (44) eine Rollenkette, vorzugsweise eine doppelte Rollenkette, ist.

7. Manipulatorwerkzeug nach einem der Ansprüche 2 bis 6, **dadurch gekennzeichnet, dass** das Spindelgehäuse (5) eine Querstrebe (27) in Form eines Absatzes oder Schuhs umfasst, die einerseits als Bezugspunkt zum Boden für die Positionierung des Gehäuses zum Zeitpunkt des Vorganges des Aufsteckens des Ballens dient, um den Ballen immer auf dieselbe Weise in Bezug auf das Gehäuse zu positionieren, und andererseits als Zug- und Antriebselement für den Schlitten (1) beim Ausstoßen des Ballens im Zusammenwirken mit einem Anschlag (26), der auf dem Schlitten angeordnet ist, dient.

8. Verpackungsschlitten für die Durchführung des Verfahrens nach Anspruch 1, der mit dem Manipulatorwerkzeug (6) nach einem der Ansprüche 2 bis 7 zusammenwirkt, umfassend einen Boden (10), der sich im Vorlaufbereich der Streckeinrichtung (16) erstreckt, dass der Boden aus dem vorlaufseitigen Teil von Schienen (11) gebildet ist, die sich auf dem Schlitten über eine Länge von zumindest gleich zweimal der Länge eines Ballens (2) erstrecken, dass die Schienen mit dem Gehäuse des Schlittens fest verbunden sind und zwischen den vorlaufseitigen Verlängerungen (11'), die am Ende der Schienen (11') vorgesehen sind, einen Anschlag (26) in Plattenform umfassen, der am vorderen Ende der Verlängerungen (11') um eine Horizontal- und Querachse (82) angeordnet ist, dass der Anschlag am Eingang des Bodens (10) durch elastische Mittel vorspringend gehalten wird, um sich, falls erforderlich, bei Auflage und Anordnung eines Ballens auf der Sohle automatisch einzuziehen, und dass der Anschlag mit seinem nachlaufseitigen Ende (64) mit dem Tansportwerkzeug (6) und insbesondere der unter dem Gehäuse (5) dieses Werkzeugs angeordneten Querstrebe (27) zusammenwirkt, um durch Reaktion beim Ausstoßen des Ballens mit Hilfe des Schiebers (25) des Werkzeugs die automatische und gleichzeitige Verschiebung des Schlittens (1) und des Traktors (3), der das Werkzeug trägt, zu ermöglichen.

9. Schlitten nach Anspruch 8, **dadurch gekennzeichnet, dass** er zwischen den Schienen (11) im Vorlaufbereich der Streckeinrichtung (16) einen zweiten einziehbaren Anschlag (26') umfasst, der es ermöglicht, den letzten Ballen zu verpacken.

10. Schlitten nach einem der Ansprüche 8 oder 9, **dadurch gekennzeichnet, dass** der vorlaufseitige Teil des Bodens (10) des Schlittens (1); auf dessen Höhe der Anschlag (26) angeordnet ist, eine Art Rahmen bildet, der um eine querliegende Horizontalachse (80) angelenkt ist, und dass der Rahmen umklappbar und in dieser Position mit Hilfe von Bolzen (84) verriegelbar ist, und, wie auch das Gestell des Schlittens, Befestigungsmittel (79, 75) umfasst, die mit dem Dreipunktkupplungssystem (4) eines Traktors zusammenwirken.

11. Schlitten nach einem der Ansprüche 8 bis 10, **dadurch gekennzeichnet, dass** er auf der Höhe der Führungsschienen (11) des Schlittens (1) im Vorlaufbereich des Einganges der Streckeinrichtung (16) Führungen (88) umfasst, die so angeordnet sind, dass sie den Ballen bei seiner Einführung in die Streckeinrichtung zentrieren und führen, um zu vermeiden, dass die zwischen den Stützen (20) dieser Einrichtung gespannte Hülle beschädigt wird.

12. Schlitten nach einem der Ansprüche 8 bis 11, **dadurch gekennzeichnet, dass** das Gestell des Schlittens (1) derart ausgeführt ist, dass die Schienen (11), die als Stütze und Führung für die Ballen dienen, wenn sich der Schlitten in der aktiven Verpackungsposition befindet, in einer sich nahe dem Erdboden befindlichen geneigten Ebene auf einer Höhe platziert werden, die im Vorlaufbereich mit der Ballenhebekapazität des Traktors vereinbar ist, wenn letztgenannter mit einem Transportwerkzeug versehen ist, das direkt auf dem Dreipunkthebesystem befestigt ist, und im Nachlaufbereich auf einer Höhe von ungefähr einigen Zentimetern, weniger oder gleich 10 Zentimeter, zum Erdboden platziert werden.

13. Schlitten nach einem der Ansprüche 8 bis 12, **dadurch gekennzeichnet, dass** die Länge LS des Bodens (10) des Schlittens, die sich zwischen dem Eingang der Streckeinrichtung (16) und der aktiven Fläche (64) des Riegels (26) erstreckt, im Wesentlichen größer ist als die Länge eines Ballens (2), erhöht um die Distanz zwischen dem Schieber und der aktiven Fläche der Querstrebe (27), die sich unter dem Gehäuse (5) des Werkzeugs befindet und mit der aktiven Fläche (64) des Riegels (26) zusammenwirkt.

14. Schlitten nach Anspruch 13, **dadurch gekennzeichnet, dass** die Länge LR der Führungsschienen (11) in der Größenordnung von zweimal ein Drittel der Länge der Ballen (2) ist und dass die Schienen (11) sich im Nachlaufbereich der Mittelachse der Streckeinrichtung (8) auf einer Länge erstrecken, die ungefähr ein Drittel der Länge LR ausmacht.

## Claims

1. A method for sheathing bales of plants into a tubular plastic film forming a sheath (17), using a carrier (1) that moves as the sheath (17) is being filled, consisting:
- in handling a bale by means of a transport vehicle provided with a handling tool (6) that is equipped with spindles (12),
- in laying the bale on the carrier, upstream of the supports (20) of a drawing frame (16) enabling storage of the tubular plastic film,
- in pushing the bale inside the sheath, resting against the previous bale,
- in moving the carrier (1) by a step matching-the length of said bale, **characterized in that** this method consists in pushing said bale by means of said handling tool equipped with a pusher-ejector device -whose movement causes, by reaction and simultaneously the reverse motion of said vehicle, whereas said tool is arranged to cause said carrier (1) to move simultaneously over a distance corresponding at least to the length of the bale (2) laid last on said carrier.

2. A handling tool liable to be carried by a transport vehicle such as a farming tractor, for implementing the method according to claim 1, comprising a frame (5) on which is mounted at least a pair of spindles (12) and a pusher-ejector device integral with said frame, behind said spindles the travel C of which is at least equal to the length of a bale, which frame comprising fastening means (7) to the three-point coupling system (4) of a tractor or a conventional loading arm (30) arranged at the front of said tractor, the tool comprising means to drive the carrier (1).

3. A handling tool according to claim 2, **characterized in that** the pusher-ejector device consists of a kind of compasses that extend under the effect of a hydraulic actuator (41) notably, causing a pusher (25) properly speaking, to move over a travel C that is at least equal to the length of the bale (2), in order to eject said bale from the spindles (12) of the spindle-carrying frame and to move simultaneously the tool-carrying tractor and the sheathing carrier by a step corresponding to at least the length of the bale ejected.

4. A handling tool according to claim 3, **characterized in that** the compasses consist of a first leg (35) whose length corresponds substantially to the width of the bale (2), which leg is linked at one of its ends on an axle (36) integral with the spindle-carrying frame and of a second leg (37) linked at the other end of said first leg, and that is provided at its free end, with the pusher (25) centred with respect to the middle vertical plane of both spindles (12), which first leg (35) is mobile under the effect of the actuator (41) causing, when pivoting, the second leg (37) to extend so that the pusher (25) remains substantiallycentred on said longitudinal axis of the tractor (3) throughout its travel.

5. A handling tool according to claim 4, **characterized in that** the second leg (37) extends around its swivelling axis (39) situated at the end of the arm (35), by means of a chain or cable (44) that reels around a circular sector of a pulley-pinion (45), which cable is integral with the second leg (37) and in particular at one of its ends, with said circular sector (45), whereas the other end (47) is integral with the frame (5) at a point selected to enable displacement of the pusher (25) along a line that corresponds to the longitudinal axis of the tractor (3).

6. A handling tool according to claim 5, **characterized in that** the chain (44) is in the form of a roller chain, preferably a double roller chain.

7. A handling tool according to any one of claims 2 to 6, **characterized in that** the spindle-carrying frame (5) comprises a crosspiece (27) in the form of a heel or shoe that, on the one hand, serves as a marker with respect to the ground to enable positioning of said frame during the spindling of a bale, in order to place said bale with respect to said frame always in the same fashion, and, on the other hand, serves as a means for pulling and driving the carrier (1) during the ejection of the bale, in co-operation with a stop (26) provided on said carrier.

8. A sheathing carrier for implementing the method according to claim 1, co-operating with the handling tool (6) according to any one of claims 2 to 7, comprising a base plate (10) extending upstream of the drawing frame (16), which base plate consists of the upstream section of the rails (11) that extend on said carrier over a length equal to at least twice the length of a bale (2), which rails are integral with the frame of the carrier and comprise, between the upstream extensions (11') provided at the end of said rails (11), a stop (26) in the form of a plate, that is linked at the front end of said extensions (11') around a horizontal and transversal axis (82), which stop is maintained in a protruding position at the inlet of the base plate (10), by elastic means in order to be retracted automatically if necessary when presenting and placing a bale onto said base plate, which stop co-operates by its downstream end (64) with said handling tool (6) and in particular the crosspiece (27) arranged under the frame (5) of this tool to enable, by reaction during the ejection of the bale by means of the pusher (25) of said tool, automatic and simultaneous displacement of said carrier (1) and of the tractor (3) that carries said tool.

9. A carrier according to claim 8, **characterized in that** it comprises, between the rails (11), upstream of the drawing frame (16), a second removable stop (26'), that enables sheathing of the last bale.

10. A carrier according to any one of claims 8 or 9, **characterized in that** the upstream section of the base plate (10) of the carrier (1), by which is situated the stop (26) forms a kind of swivelled frame around a transversal horizontal axis (80), which frame is retractable and lockable in this position using tension rods (84) and comprises, as well as the chassis of said carrier, anchoring means (79, 75) co-operating with the three-point coupling system (4) of a tractor.

11. A carrier according to any one of claims 8 to 10, **characterized in that** it comprises at the guiding rails (11) of the carrier (1), upstream of the inlet of the drawing frame (16), guides (88) provided for centring and guiding the bale during insertion into the drawing frame in order not to damage the sheath stretched between the supports (20) of said drawing frame.

12. A carrier according to any one of claims 8 to 11, **characterized in that** the chassis of the carrier (1) is arranged in order to place the rails (11) used for supporting and guiding the bales, when said carrier is in active sheathing position, on a tilted plane situated close to the ground, at a height compatible, upstream, with the lifting capacity of the bales of the tractor when the latter is provided with a handling tool fixed directly on the three-point lifting system, and downstream, at a height of about some centimeters with respect to the ground, less or equal to 10 centimeters.

13. A carrier according to any one of claims 8 to 12, **characterized in that** the length LS of the base plate (10) of the carrier extending between the inlet of the drawing frame (16) and the active face (64) of the lock (26) is substantially greater than the length of a bale (2) increased by the distance between the pusher and the active face of the crosspiece (27) situated below the frame (5) of said tool and that co-operates with said active face (64) of the lock (26).

14. A carrier according to claim 13, **characterized in that** the length LR of the guiding rails (11) is approximately twice and a third of the length of the bales (2), which rails (11) extend downstream of the middle axis of the drawing frame (6), over a length equal to approximately one third of said length LR.
